# EUROPÄISCHE PATENTSCHRIFT

(11) **EP 1 288 119 B1**
(45) Veröffentlichungstag und Bekanntmachung des Hinweises auf die Patenterteilung: **12.07.2006**
(21) Anmeldenummer: 02018950.2
(22) Anmeldetag: 26.08.2002
(51) Int. Cl.: B62M 3/00, B62J 23/00, B62J 13/00

(54) **Pedalarm eines Fahrrades**
Crank arm for bicycle
Manivelle de pédalier

(30) Priorität: 27.08.2001 DE 10140964
(43) Veröffentlichungstag der Anmeldung: 05.03.2003
(73) Patentinhaber: RIXEN & KAUL GmbH, 42699 Solingen (DE)
(72) Erfinder: Rixen, Edgar , Dipl.-Des., 42699 Solingen (DE); Flammann, Norbert, Dipl.-Ing., 42655 Solingen (DE)

(56) Entgegenhaltungen:
- DE-U- 8 704 758
- US-A- 4 487 424
- US-A- 5 003 840
- US-A- 5 320 583

## Beschreibung

Die Erfindung betrifft einen Pedalarm eines Fahrrades, mit einem Schutzschild am Pedalarm und mit mindestens einem am/im Pedalarmauge angebrachten Anschlag für die axiale Festlegung des Zentralbereiches des Schildes, mit einem zweiten Anschlag für die axiale Festlegung des Zentralbereiches des Schildes, wobei die Befestigung des Schutzschildes in axialer Richtung ausschließlich in dessen Zentralbereich und ausschließlich am oder im Auge des Pedalarms erfolgt und einen Schild für einen Pedalarm mit Mitteln zur Befestigung des Schildes im tretlagerseitigen Auge des Pedalarms.

Im Bereich des Tretlagers eines Fahrrades ist neben den beiden Pedalarmen stets auch mindestens ein Kettenblatt drehfest mit der Tretlagerwelle verbunden. Neue Fahrräder haben meistens einen Satz von 3 Kettenblättern unterschiedlicher Größe. Üblicherweise weist der Pedalarm an seinem auf der Tretlagerwelle montierten Ende ein Auge auf und wird mit einem leicht konischen Vierkant auf der Tretlagerwelle positioniert und durch eine Schraube verankert. Die Befestigung der Kettenblätter erfolgt an sternförmig vom Pedalarmauge nach außen weisenden Armen, die sehr oft integral mit dem Pedalarm gefertigt werden. An den freien Enden der Arme sind Zentrieransätze und Schraublöcher zur zentrischen Befestigung des oder der Kettenblätter vorgesehen.

Die Kette ist in der Praxis schmutzig, weil sie geschmiert ist und der Staub der Straße in Verbindung mit dem Schmier der Kette eine zähe Masse bildet, die das (Hosen-)bein des Fahrradfahrers beschmutzt. Zudem kann sich das Hosenbein des Fahrradfahrers an den Zähnen des Kettenblattes verfangen und zwischen die Kette und das Kettenblatt geraten. Das führt zur Verschmutzung des Hosenbeins, zur Beschädigung der Hose und kann eine Gefährdung für den Fahrradfahrer darstellen.

Ein Schutzschild, der nicht den richtigen Abstand von Pedalarm und Kettenblatt hat, ist schlecht, weil er entweder so weit absteht, daß er beim Treten des Pedals hindert oder bei zu kleinem Abstand klappert und sich dabei mittelfristig selbst beschädigt oder zerstört. Ein solcher, eingangs genannter Pedalarm, der alle Merkmale des Oberbegriffs des Anspruchs 1 offenbarr, ist aus der US-PS 5320583 bekannt. Dabei wird der tellerförmige Schutzschild von einer in die Tretlagerwelle eingesetzten Befestigungsschraube, die den Schild zentral durchdringt und mit ihrem schaftseitigen Kopfkragen einseitig axial fixiert gegen das außen liegende Kettenblatt gedrückt. Der Kopfkragen bildet einen ersten Anschlag für den Schutzschild. Dabei kommt der Schild mit einem in Umfangsnähe ausgebildeten Kragen, der, bezogen auf das benachbarte Kettenblatt, innerhalb des Zahnkranzes gegen das Kettenblatt drückt, zur Anlage. Die Tellerform des bekannten Schildes umfaßt eine kreisrunde und leicht geschusselte Gestalt. Sein größter Durchmesser überragt den Zahnkranz des benachbarten Kettenblattes geringfügig. Im Bereich des Pedalarms hat der Schild einen Ausschnitt, durch den der Pedalarm geführt ist. Nachteilig bei dieser Lösung ist der Umstand, daß der Kragen am Schild der jeweiligen Ausbildung des Kettenblattes angepaßt sein muß. Insbesondere im Nachrüstbereich, ist es schwierig, Schilde zu finden, die zu der jeweiligen Ausbildung des abzudeckenden Kettenblattes passen.

Dic Montage von nicht genau angepaßten Schutzschilden an Pedalarmen führt dazu, daß der Schutz nicht richtig sitzt oder mit einem Umwerfer kollidiert.

Generell ist in neuerer Zeit der mit den Kettenblättern verbundene Pedalarm meist aus optischen Gründen mit harmonisch gerundeten Formen ausgeführt, die auch in den Bereich des Pedalarmauges an der Tretlagerwelle hineinreichen. Zwar gibt es in diesem Auge eine abgesetzte Bohrung mit Innengewinde, das es erlaubt, eine Abziehvorrichtung für den Pedalarm dort einzuschrauben, jedoch ist es schwierig, den vergleichsweise großen Schutzschild dort festzuschrauben, da das Ansetzen eines Schraubgewindes an dem großen Schild unter Verdeckung der Situation im Achsbereich der Tretlagerwelle und unter Berücksichtigung der geschwungenen Form des Pedalarms behindert wird.

Der Erfindung, sowie beschrieben in Anspruch 1, liegt deshalb die Aufgabe zugrunde, einen leicht zu montierenden und universell einsetzbaren Schutzschild am Pedalarm eines Fahrrades bereitzustellen.

Die Lösung dieser Aufgabe ist gekennzeichnet durch einen am oder im Auge des Pedalarms angebrachten und zwischen dem Pedalarmauge und dem Schutzschild angeordneten Adapter und dadurch, daß der zweite Anschlag am Adapter zwischen dem Pedalarmauge und dem Schutzschild ausgebildet ist. Dadurch wird die Montage des Schildes vereinfacht, weil die Befestigung des im Vergleich zum tellerförmigen Schild kleinen und deshalb drehbaren Adapters im oder am Pedalarmauge einfacher und überschaubarer ist und die Befestigung des Schildes auf dem Adapter eine speziell für diese Situation ausgelegte Gestaltung erlaubt. Die Positionierung des Schildes auf dem Adapter ist wegen der bestimmungsgemäß frei gestaltbaren Anpassung des Adapters an den Schild im übrigen einfacher. Der den Achsialanschlag bildende Adapter ist zwischen dem axialen Endbereich der Tretlagerwelle und dem Schild angeordnet. Die Lösung umfaßt eine hinreichende und abschließende Befestigung des Schutzschildes im Achsbereich des Tretlagers. Der eine erste achsiale Anschlag wird z.B. von der ringförmigen Stirnfläche der Befestigungsschraube gebildet, während der zweite Anschlag von einer Stirnfläche am Adapter gebildet wird, der sich ausschließlich im/am Pedalarmauge abstützt, vorzugsweise im Bereich der Befestigungsschraube für den Pedalarm an der Tretlagerwelle am Grund des Pedalarmauges. Eine Vereinfachung stellt die direkte Befestigung des tellerförmigen Schildes, z.B. durch eine Schraube, dar.
Die Befestigungsschraube durchdringt den Schild von außen zentral und ist auf der Drehachse der Tretlagerwelle positioniert. Eine zusätzliche Abstützung im Umfangsbereich des Schildes ist aus Festigkeitsgründen nicht erforderlich. Die erfindungsgemäße Befestigung des Schutzschildes baut auf auf eine in der Praxis weitestgehend vereinheitlichte Gestaltung des Bereiches des Pedalarmauges, da, wo der Pedalarm am Tretlager befestigt wird. Anpassungen des Pedalarmes oder der Tretlagerwelle sind nicht erforderlich.
In erster Linie ist daran gedacht, den Zentralbereich des Schildes am tretlagerseitigen Auge mit dem Pedalarm oder dem Adapter zu verschrauben. Eine Verschraubung hat den Vorzug großer Festigkeit. Auch ist ein Losdrehen aufgrund des den Schild durchdringenden Pedalarmes nicht zu befürchten. Eine Verschraubung bringt jedenfalls dann wesentliche Vorteile, wenn das Innengewinde für die Abziehvorrichtung für den Pedalarm vorhanden ist.

Dabei ist der Adapter vorzugsweise im Pedalarmauge befestigt, so daß der Adapter und der Schild nacheinander befestigt werden. Der Befestigungsvorgang wird dadurch auch für Laien übersichtlicher, was im Nachrüstbereich von großer Bedeutung ist.

In alternativer Ausgestaltung der Erfindung wird vorgeschlagen, daß der Adapter an der Schraube zur Befestigung des Pedalarms auf der Tretlagerwelle durch Rastmittel oder durch Gewinde befestigt wird. Diese Schraube kann im Bereich der Nachrüstung mit dem erfindungsgemäßen Schild als Beigabe mit geliefert werden, so daß alle Teile die zur Montage des Schildes benötigt werden, aus einer Hand kommen.

Besonders einfach gestaltet sich diese Ausführungsform der Erfindung, wenn der Adapter an seinem tretlagerseitigen Ende Rastmittel aufweist und die Schraube zur Befestigung des Pedalarmes an der Tretlagerwelle einen für die Rastmittel passenden Hinterschnitt an ihrem Kopf trägt. Aus Geometriegründen hat die Befestigungsschraube an der Unterseite ihres Kopfes einen die Anlagefläche des Kopfes verbreiternden Kragen, auf dessen Oberseite sich der Adapter mit einem Vorsprung in Form eines Rohrstutzens als Ergänzung zur Verrastung am eigentlichen Schraubenkopf abstützen kann. Diese Ausführungsform zeichnet sich durch eine werkzeugfreie Befestigung aus. Sie kann mit ihrem Rastsitz so gefertigt sein, daß der Schild nur unter Inkaufnahme seiner Zerstörung demontiert werden kann oder eine wiederholte Montage oder Demontage erlauben. Die notwendige Zerstörung des Schildes ist tolerabel, da eine Demontage des Pedalarmes nur selten notwendig ist.

Nach einer weiteren Ausgestaltung der Erfindung ist vorgesehen, daß der Adapter oder eine ihn durchdringende Schraube an einem Längsende ein Außengewinde aufweisen, das in ein Innengewinde am tretlagerseitigen Auge des Pedalarmes eingeschraubt wird.
Einschrauben hat unter dem Gesichtspunkt der Sicherheit und der Einfachheit beim Befestigen des Adapters Vorteile. Diese Ausgestaltung geht davon aus, daß im Bereich des Auges am Pedalarm ein Gewinde vorhanden ist. Bei modernen Fahrrädern ist ein solches Gewinde, wie erwähnt, vorhanden, um mit Hilfe eines Abziehers den Pedalarm von der Tretlagerwelle abziehen zu können. Dieses Gewinde kann zum Zwecke der Befestigung des Schildes genutzt werden.

Alternativ kann der Adapter an einem zusätzlichen Gewinde an der Befestigungsschraube angeschraubt sein. Das Gewinde kann zum einen außen am Kopf der Befestigungsschraube des Pedalarms an der Tretlagerwelle ausgebildet sein oder ein Innengewinde in der Befestigungsschraube sein. Alle Schraubverbindungen sind bei der Verwendung eines Adapters und zu dessen Befestigung im Pedalarmauge leicht zu montieren, nicht zuletzt wegen der guten Einsehbarkeit der Verschraubungsstelle.

In einer weiterführenden Ausgestaltung der Erfindung ist vorgesehen, daß der Adapter an seinem dem Tretlager abgewandten, freien Ende eine radiale Erweiterung trägt. Vorzugsweise ist diese Erweiterung tischförmig ausgebildet, wobei der Durchmesser des Tisches etwa doppelt so groß ist wie der der in das Pedalarmauge greifenden Nabe des Adapters. Diese Gestaltung erlaubt eine einfache und präzise Positionierung des Schildes auf dem Adapter. Die radiale Erweiterung kann bei einer Ausführung des Adapters in Kunststoff einstückig an dem im wesentlichen rohrförmigen Adapter angeformt sein. Sonst ist eine Befestigung einer Scheibe auf dem rohrförmigen Körper des Adapters vorzusehen.

Eine vorteilhafte Weiterbildung für die radiale Erweiterung am Adapter stellt dar, daß der radialen Erweiterung am Adapter eine passende Aufnahme zur konzentrischen Positionierung am tellerförmigen Schild zugeordnet ist.
Dadurch wird die konzentrische Positionierung des Schildes sichergestellt.

Die notwendigen gestalterischen Maßnahmen stellen sich insbesondere an dem Schild und an dem Adapter dar. Für das Nachrüsten von Fahrrädern wird deshalb ein Schild für einen Pedalarm mit Mitteln zur Befestigung des Schildes im tretlagerseitigen Auge des Pedalarms vorgeschlagen, wobei die Befestigungsmittel einen Adapter umfassen und wobei Mittel zur zentrierenden Befestigung des Schildes am Adapter an der Schildinnenseite vorgesehen sind.

Eine vorteilhafte Weiterbildung der Erfindung besteht in der Verwendung von Stellmitteln zur Veränderung des achsialen Abstandes des Schildes vom verdeckten Kettenblatt. Diese Maßnahme dient der Verbesserung der Universalität beim Einsatz des erfindungsgemäßen Schildes. Unabhängig von einer in der Praxis anzutreffenden Verkröpfung von Kettenblättern kann der für einen eventuellen Umwerfer und die Kette an sich erforderliche Zwischenraum zwischen dem zu schützenden Kettenblatt und dem Schild auf diesem Wege eingestellt werden.

Eine besonders komfortable und präzise Einstellmöglichkeit ergibt sich dadurch, daß die Stellmittel von einer Stellschraube und einem gegenwirkenden Federelement zur stufenlosen Verstellung gebildet werden, wobei die Stellmittel Außen- und Innengewinde aufweisen können, von denen mindestens eines unabhängig vom Schild drehbar ist. Das Federelement drückt den Schild gegen den Kopf der Stellschraube.
Bevorzugt ist vorgesehen, eine von außerhalb des Schutzschildes zugängliche, den Schild durchbrechende Stellschraube einzusetzen, wobei der auf der Tretlagerseite des Schildes angeordnete Anschlag von dem Federelement beaufschlagt ist. Dies eröffnet die Möglichkeit den Spalt zwischen dem Schild und dem dahinter liegenden Kettenblatt am fertig montierten Schild einzustellen.

Eine alternative Ausführungsform der achsialen Einstellung des Schildes am Pedalarm wird darin gesehen, daß ein oder mehrere Distanzstücke zwischen dem Auge des Pedalarmes und dem Schild vorgesehen sind.

Das Distanzstück kann zur Vergrößerung des Abstandes zwischen dem Schild und dem Kettenblatt zwischen dem letzteren und dem Auge des Pedalarmes eingefügt werden. Es soll bevorzugt zwischen den Adapter und den tellerförmigen Schild plaziert werden. Das Distanzstück wird vorzugsweise aus Kunststoff gespritzt und kann deshalb preiswert hergestellt werden. Weiterhin können unterschiedlich dicke Distanzstücke zur Auswahl oder Kombination dem Schild beim Verkauf beigefügt sein. Eine vorteilhafte Möglichkeit bei der Gestaltung des Distanzstückes besteht darin, daß ein scheibenförmiger Grundkörper auf seinen beiden Stirnseiten unterschiedlich tief genapft ist, so daß sich durch Weglassen des Distanzstückes und durch zwei Wendepositionen drei unterschiedliche Achsialabstände zwischen dem Schild und dem Kettenblatt einstellen lassen.
Der Effekt der unterschiedlichen achsialen Beabstandung kann durch eine Mehrzahl von unterschiedlichen Rastsitzen am Adapter und einem Rastmittel am Schild -- oder umgekehrt -- beim Aufstecken des Schildes auf den Adapter erzielt werden. Die Verrastung mit mehreren Sitzen kann auch in den Gewindegängen des Abzugsgewindes für den Pedalarm im Pedalarmauge gestaltet werden. Hierzu wird am Adapter ein rohrförmiger in das Pedalarmauge reichender Stutzen mit Außengewinde in längsgeschlitzter Ausführung vorgesehen, wobei die mit den Gewindeabschnitten ausgebildeten Zungen am Adapter (gewinde-) gangweise tiefer in das Pedalarmauge eingerastet werden können.
Die Rastmittel können auch durch eine Verhakung ersetzt werden, die dann ohne eine Zerstörung der Verbindung nicht mehr lösbar ist, da ein lösen des Pedalarms selten oder wie erforderlich ist.

Die Erfindung wird im einzelnen anhand der Zeichnung näher erläutert, dabei zeigen :
- Fig. 1 :: Ein vorderes Kettenblatt mit Pedalarm für ein Fahrrad;
- Fig. 2 :: Eine Schnittdarstellung nach Linie II-II in Fig.1 mit explosiv dargestelltem Schild;
- Fig. 3 :: Eine vergrößerte, ausschnittweise Schnittdarstellung ähnlich Fig.2
- Fig. 4 :: Einen Schild mit Adapter, passend zu Fig. 3;
- Fig. 5 :: Eine Darstellung entsprechend Fig. 3 mit einer alternativen Ausführungsform;
- Fig. 6 :: Eine weitere Ausführungsform eines Schutzschildes mit Adapter, passend zu Fig.5
- Fig. 7 :: Eine weitere Alternative zu der Ausführungsform nach Fig. 3;
- Fig. 8 :: Den zu Fig. 7 gehörigen Schild;
- Fig. 9 :: Einen Schild in Draufsicht.
- Fig. 10:: Einen Schild mit einstellbarer Achsiallage und Distanzstück;
- Fig. 11:: Einen Kettenblattschutz mit einstellbarer Achsiallage durch mehrere Rastpositionen,
- Fig. 12:: Einen in seiner Achsiallage stufenlos einstellbaren Kettenblattschutz.

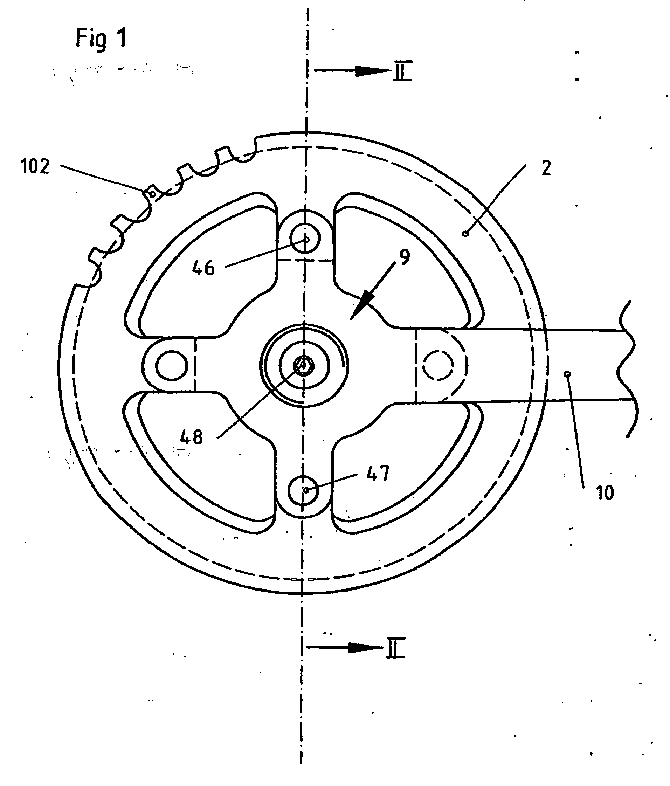

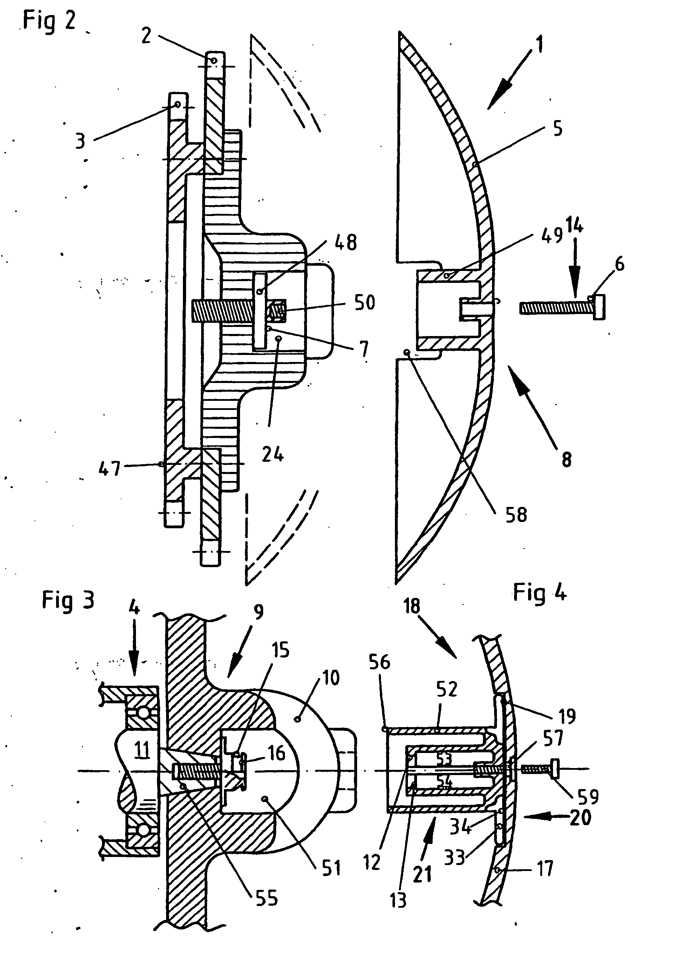

Fig.1 und Fig.2 zeigen Kettenblätter 2,3 an einem Pedalarm 10 für das Tretlager 4 (Fig.3) an einem Fahrrad. Am äußeren Umfang des Kettenblattes 2 ist eine Verzahnung 102 für eine nicht dargestellte Fahrradkette gezeigt. Die Kettenblätter 2 und 3 sind mit Verschraubungen 46, 47 am Kreuz des Pedalarms 10 zentriert und befestigt. Das Kreuz mit dem Pedalarm 10 ist mit einer Schraube 48 am Tretlager 4 festgeschraubt. Zur Abdeckung der Kettenblätter 2, 3 dient ein Kettenblattschutz 1, der einen tellerförmigen Schild 5 umfaßt und in seinem Zentralbereich 8 auf seiner Innenseite eine Nabe 49 aufweist, die sich im montierten Zustand an einem Kragen an der Schraube 48 abstützt. Der Kragen bildet einen Anschlag 7 zur achsialen Fixierung des Zentralbereiches 8 des Kettenblattschutzes 1. Für den Durchtritt des Pedalarmes 10 ist ein Ausschnitt 58 vorgesehen. Die Nabe 49 wird von einer Schraube 14 durchgriffen, die mit der ringförmigen Stirnfläche 6 ihres Kopfes einen Anschlag bildet. Der Schild 5 wird ausschließlich in seinem Zentralbereich 8 zwischen den beiden Anschlägen 6, 7 im Achsbereich des Tretlagers 4 eingespannt. Der Kettenblattschutz 1 zentriert sich im Bereich des Sackloches 24 entweder an der Wandung des Sackloches selbst und/oder am Kragen der Schraube 48. Der gesamte Schutzschild ist dadurch im Achsbereich der Tretlagerwelle 11 (Fig.3) zentriert, axial fixiert und durch die achsiale Abstützung auch parallel zum Kettenblatt 2 ausgerichtet.
Dabei wird die speziell ausgebildete Befestigungsschraube für den Pedalarm mit dem Innengewinde 50 im Schraubenkopf als Adapter angesehen.
Die Schraube 48 trägt in ihrem Kopf ein Innengewinde 50, in das die Schraube 14 eingesetzt wird, um den Schild 1 festzuspannen.

Die in Fig.3 und Fig.4 vergrößert dargestellte Befestigungssituation des Kettenblattschutzes 18 im Achsbereich des Tretlagers 4 zeigt einen Schild 17 und einem diesen tragenden Adapter 21. Adapter und Schild sind im montierten Zustand mit einer Schraube 59 verbunden. Der Adapter 21 trägt eine Nabe 52, die sich mit ihrer Stirnfläche 56 im Grund des versenkten Auges 51 des Pedalarms 10 oder dem darin angeordneten Schraubenkopf 16 abstützt. Das als Sackloch ausgeführte Auge 51 bildet einen Anschlag für den Schild bzw. seinen Adapter. Der Schraubenkopf 16 ist Teil der Befestigungsschraube, mit der der Pedalarm 10 in seinem Auge 51 mit der Tretlagerwelle 11 an deren konischem Vierkant 55 zentral festgeschraubt wird. Außen an der Nabe 52 ist eine tischartige kreisrunde Erweiterung 33 vorgesehen, die in eine entsprechende Aufnahme 34 an der Innenseite des Zentralbereiches 20 des Kettenblattschutzes 18 eingesetzt ist und dort gegen ihre als Anschlag 19 ausgebildete Stirnseite gespannt wird. Innerhalb der Nabe 52 ist ein weiterer nabenförmiger Vorsprung vorgesehen, der längs geschlitzt ist und dadurch Zungen 53, 54 ausbildet. An den freien Enden der Zungen ist mit 12 ein innerer Wulst bezeichnet, der in einen als Rastsitz ausgebildeten kreisrunden Hinterschnitt 15 am Schraubenkopf 16 der Befestigungsschraube für den Pedalarm 10 eingreift. Dies mit dem Zweck, eine lösbare Verbindung zwischen dem Adapter 21 und dem Schraubenkopf 16 zu bilden. Alternativ, und nur aus Gründen der Konzentration in dem gleichen Adapter gezeichnet, kann das freie Ende der Zunge 54 mit einem Widerhaken 13 ausgebildet sein, der -- einmal mit dem Hinterschnitt 15 verhakt -- eine nur unter Zerstörung des Adapters lösbare Verbindung mit dem Schraubenkopf herstellt. Eine Kragenfläche des Hinterschnitts 15 bildet einen zweiten Anschlag für den Kettenblattschutz 22.

Auf den auf der Tretlagerachse vormontierten Adapter 21 wird der Schild 17 mit seiner Aufnahme 34 aufgesetzt, dabei an der Erweiterung 33 zentriert und bezüglich des Kettenblattes 2 in eine parallele Anordnung gebracht. Weitere Abstützungen des Kettenblattschutzes 18 im Umfangsbereich der eigentlichen Kettenblätter sind dabei nicht erforderlich. Schließlich wird durch eine Schraube 59, die durch ein zentral im Schild 17 in dessen Zentralbereich angeordnetes Schraubloch 57 gesteckt wird, der Schild 17 mit dem Adapter 21 verschraubt. Die vorbeschriebene Form der Befestigung des Adapters 21 im Achsbereich des Tretlagers 4 mit den Zungen 53, 54 läßt sich gleichermaßen auf einen Schild anwenden, der die Nabe 52 angeformt hat, ohne daß es sich dabei um einen bestimmungsgemäß lösbaren Adapter handelt. Die speziell ausgebildete Schraube 16 wird dabei als ein weiterer Adapter angesehen.

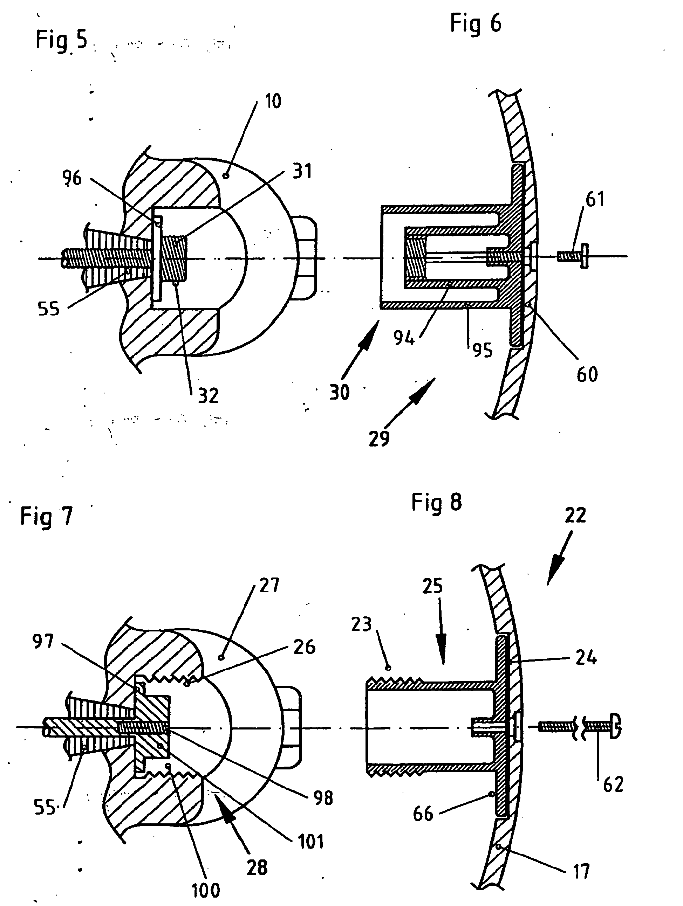

In Fig.5 und Fig.6 ist eine Befestigungslösung für einen Kettenblattschutz 29 gezeigt, der mit einem Adapter 30 der Tretlagerachse befestigt wird. Hierzu ist eine spezielle Schraube 31 vorgesehen, die den Pedalarm 10 auf den Vierkant 55 aufzieht. Die Schraube 31 ist als Innensechskantschraube ausgebildet, die am Umfang ihres Kopfes ein Gewinde 32 trägt. Die in Fig.6 gezeigte Adapterlösung zur Befestigung des Kettenblattschutzes 29 umfaßt eine Nabe 94 mit einem Innengewinde, das auf das Außengewinde am Kopf der Schraube 31 aufgedreht wird. Eine zweite, zur ersten Nabe 94 konzentrische Nabe 95 am Adapter 30 stützt sich am Kragen 96 an der Schraube 31 ab. Der Kragen bildet einen ersten Anschlag für den Kettenblattschutz 29. Der zweite Anschlag für den Schild wird von den Flanken des Gewindes 32 am Kopf der Schraube 31 gebildet. Damit sind beide Anschläge im Auge 9 des Pedalarms 10 konzentriert. Ein Schild 60 des Kettenblattschutzes 29 wird mit einer Schraube 61, wie im Zusammenhang mit Fig.4 beschrieben, an dem Adapter befestigt. Dabei entsteht eine ausschließlich auf Verschraubungen basierende Verbindung des Schildes mit der Tretlagerachse, ohne daß der Schild 60 selbst gedreht werden muß.

Die in Fig.7 und Fig.8 beschriebene Ausführungsform der Erfindung zeigt eine Befestigungslösung für einen Kettenblattschutz 22, dessen Schild 17 mit einem Adapter 25 an einem Pedalarm 27 befestigt ist. Der Pedalarm 27 ist mit einer speziell ausgebildeten Befestigungsschraube 101 mit einem Kragen 97 an der Spannfläche ihres Kopfes, am konischen Vierkant 55 auf der Tretlagerwelle befestigt. Die Befestigungsschraube 101 trägt ein Innengewinde 98, das von der Montageseite her zugänglich ist. Die Befestigungsschraube 101 ist im versenkten Auge 100 des Pedalarms 27 eingelassen. Die Versenkung trägt an ihrem Umfang ein Innengewinde 26, in das ein Aussengewinde 23 an dem freien Ende eines nabenförmigen Vorsprungs am Adapter 25 im montierten Zustand eingreift. Der Kragen 97 bildet eine Anlage für den Kettenblattschutz 22 ebenso wie die Gewindeflanken der Gewindebohrung 98. Zwischen beiden ist der Schild 17 eingespannt. Der Adapter 25 kann vor Montage des zugehörigen Schildes 17 in das Auge 28 am Pedalarm eingeschraubt werden und erhält im Auge 28 seine Zentrierung und Ausrichtung parallel zum Kettenblatt. Anschließend wird der Schild 17 auf eine tischförmige Erweiterung 66 am freien Ende des Adapters 25 aufgesetzt und mit einer Durchsteckschraube 62 von außerhalb des Schildes 17 in dem Innengewinde 98 der Befestigungsschraube 101 festgeschraubt.

Anstelle des Gewindes 23 kann auch eine klemmende Steckverbindung zur Vormontage des Adapters 25 im Auge des Pedalarmes vorgesehen sein, die dann bei Montage des Schildes 17 beim Einschrauben der von außerhalb des Schildes durchzusteckenden Schraube 62 ihren Formschluß und ihre Zentrierung erhält. Diese Befestigungsmöglichkeit entspricht insoweit der in Fig.2 gezeigten Lösung für einen Schild ohne separaten Adapter.

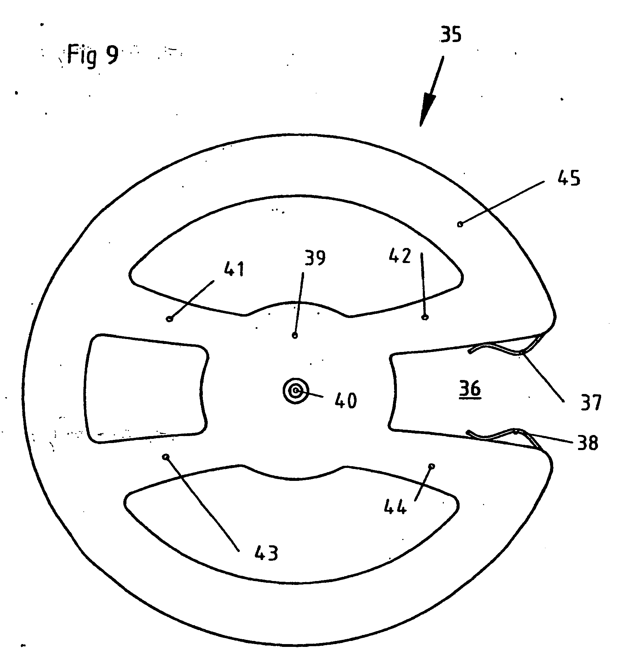

Der in Fig.9 gezeigte Schild 35 weist einen Zentralbereich 39 und eine Randabdeckung 45 auf, die durch sternförmig angeordnete Streben 41, 42, 43, 44 miteinander verbunden sind. Über ein Schraubloch 40 wird der Schild 35 im Bereich der Tretlagerachse befestigt, wie dies in Fig.2 bis Fig.8 gezeigt ist.

Im Umfangsbereich der Randabdeckung 45 ist eine Ausnehmung 36 Vorgesehen, im Bereich derer der Pedalarm 10 (s.Fig. 2) den Schild durchbricht, um dann im Achsbereich des Tretlagers 4 im Auge 9 am Vierkant 55 befestigt zu werden. Die Ausnehmung 36 ist hierzu um einige Millimeter breiter als der Pedalarm -- auch, um unterschiedliche Breiten unterschiedlicher Pedalarme ausgleichen zu können. Sie reicht mit Ihrer Tiefe bis in die Nähe des Zentralbereichs 39 des Schildes 35. Die Ausnehmung 36 weist von ihrer Laibung nach innen abkragende Stützelemente 37, 38 auf, die als Federn ausgebildet sind und etwa die Form eines Halteclips an einem Kugelschreiber haben. Die Abstützung des Schildes 35 am Pedalarm im Bereich seiner Randabdeckung 45 vermittels der Stützelemente 37, 38 dient zum einen der Drehausrichtung des gesamten Schildes und zum anderen der Beruhigung des in diesem Bereich besonders biegsam ausgeformten Randes 45 des Schildes 35.

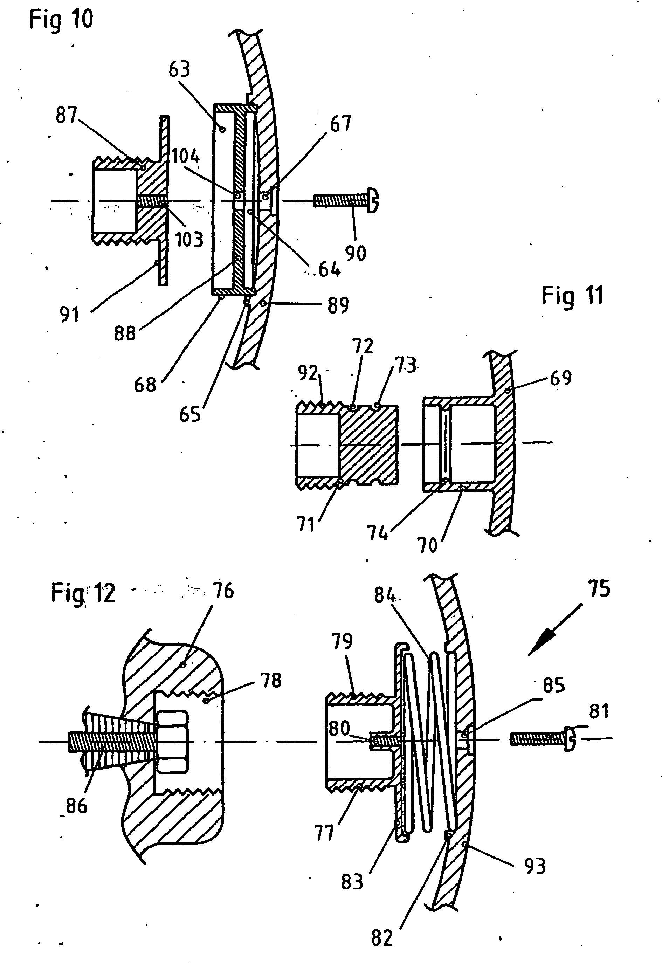

Der in Fig.10 gezeigte Schild umfaßt einen Adapter 87 mit einem Außengewinde, das in das Auge 9 (s. Fig.1) am Pedalarm 10 eingeschraubt wird, mit einem scheibenförmigen Distanzstück 88 mit unterschiedlichen Napfungen 63 und 64 an gegenüber liegenden Stirnseiten und mit einer Zentralbohrung 104. Ein an dem Adapter 87 auf der dem Distanzstück zugewandten Stirnseite angeformter radialer Kragen 91 taucht in den durch eine Felge 68 gebildeten Napf bei 63 ein und zentriert und richtet das Distanzstück 88 parallel zu dem nicht gezeigten Kettenblatt aus. Ein Schild 89 weist auf seiner Innenseite einen zentrischen Kragen 65 auf, der an die Außenabmessung des Dinstanzstückcs 88 angepaßt ist und in dem sich das Distanzstück 88 zentriert und dem Schild 89 die erforderliche Ausrichtung verleiht. Konzentrisch zu dem Kragen 65 weist der Schild 89 eine Zentralbohrung 67 auf. Eine von der Montageseite her einzusetzende Schraube 90 durchgreift die Zentralbohrung 67 am Schild 89 und die Zentralbohrung 104 im Distanzstück 88 und greift in eine Gewindebohrung 103 am Adapter 87 ein. Mit der Schraube 90 wird der gesamte Schild verspannt. Die Napftiefen bei 63 und 64 sind unterschiedlich. Durch Wenden des Distanzstückes 88 wird die achsiale Lage des Schildes variiert. Das Wenden des Distanzstückes oder das Weglassen desselben erlauben ein ausreichendes Maß an Anpassung des Schildes an unterschiedliche Kettenblätter, ohne daß zur Einstellung der achsialen Lage des Schild eine Abstützung am Rand des Schild erforderlich wäre.

Die in Fig.11 gezeigte Ausführungsform eines in seiner achsialen Lage verstellbaren Schildes 69 umfaßt einen im wesentlichen zylindrischen Adapter 71, der mit einem Außengewinde 92 in das Auge 9 eines Pedalarmes 10 eingeschraubt wird. Am freien Längsabschnitt des Adapters 71 sind am Umfang zwei nutförmige Rastsitze 72, 73 ausgebildet, denen auf der Seite des Schildes 69 ein nabenförmig ausgebildeter Achsialkragen zugeordnet ist, der an seinem freien Ende eine innere Rastlippe 74 aufweist. Der nabenförmige Achsialkragen 70 ist so lang, daß die Rastlippe 74 in beide Rastsitze 72 und 73 eingebracht werden kann. Durch die Rastsitze 72, 73 erhält der Schild 69 eine ausreichende Zentrierung und Parallelstellung zu dem benachbarten Kettenblatt ausschließlich in seinem Zentralbereich um die Tretlagerachse.

Die in Fig.12 gezeigte Ausführungsform eines Kettenblattschutzes 75 zeigt eine stufenlose Einstellung der achsialen Lage des Schildes 93. Der Kettenblattschutz 75 umfaßt einen Adapter 77, eine Feder 84 und einen Schild 93 sowie eine Stell- und Spannschraube 81. Der Adapter 77 mit seinem Außengewinde 79 wird in ein Innengewinde 78 an einem Pedalarm 76 eingeschraubt. Letzterer wird mit einer Schraube 86 auf der nicht gezeigten Tretlagerwelle festgeschraubt. An seinem der Montageseite zugewandten Längsende trägt der Adapter 77 eine tellerförmige Erweiterung 83, in der die Schraubenfeder 84 zentriert einliegt. Zentral in der Erweitung 83 ist eine Gewindebohrung 80 vorgesehen, der eine fluchtende Zentralbohrung im Schild 75 entspricht. Konzentrisch mit der Zentralbohrung 85 ist auf der Innenseite des Schildes 93 ein Kragen 82 ausgebildet, der die Feder 84 zentrierend einschließt. Das dem Schild 93 zugewandte Ende der Feder 84 bildet einen flexiblen Anschlag für den Schild 93.

Zur Montage des Schildes 93 wird zunächst der Adapter 77 in die Gewindebohrung 78 am Pedalarm 76 eingeschraubt. Danach wird die Feder 84 mit dem Schild 93 in die Erweiterung 83 am Adapter gesetzt und die Schraube 81 wird durch die tischförmige Erweiterung 83 und die Feder 84 gesteckt und in die Gewindebohrung 80 am Adapter 77 eingeschraubt. Die Tiefe des Einschraubens der Schraube 81 bestimmt die achsiale Position des Schildes 93 relativ zu dem in Fig.12 nicht gezeigten Kettenblatt (Vergl. Fig.2). Durch Drehen an der Schraube 81 kann der Abstand des Schildes 93 des Kettenblattschutzes 75 relativ zu dem Kettenblatt stufenlos und feinfühlig eingestellt werden.

Alle beschriebenen oder bildlich dargestellten Merkmale bilden für sich oder in beliebiger sinnvoller Kombination den Gegenstand der Erfindung, auch unabhängig von ihrer Zusammenfassung in den Ansprüchen oder deren Rückbeziehung.

## Patentansprüche

1. a) Pedalarm (10, 27, 76) eines Fahrrades,
b) mit einem Schutzschild (1, 5, 17, 69, 89) am Pedalarm (10, 27, 76) und
c) mit mindestens einem am/im Pedalarmauge (9, 28, 51, 100) angebrachten Anschlag (6) für die axiale Festlegung des Zentralbereiches (8, 20, 39) des Schildes (1, 5, 17, 69, 89),
d) mit einem zweiten Anschlag für die axiale Festlegung des Zentralbereiches (8, 20, 39) des Schildes (1, 5, 17, 69, 89),
e) wobei die Befestigung des Schutzschildes (1, 5, 17, 69, 89) in axialer Richtung ausschließlich in dessen Zentralbereich und ausschließlich am oder im Auge (9, 28, 51, 100) des Pedalarms erfolgt,
**gekennzeichnet durch**
f) einen am oder im Auge (9, 28, 51, 100) des Pedalarms angebrachten und zwischen dem Pedalarmauge und dem Schutzschild angeordneten Adapter (21, 25, 30, 48, 71, 87, 77), und **dadurch**,
g) daß der zweite Anschlag (7, 19, 84) am Adapter (21, 25, 30, 48, 71, 87, 77) zwischen dem Pedalarmauge (9, 28, 51, 100) und dem Schutzschild (1, 5, 17, 69, 89) ausgebildet ist.

2. Pedalarm (10) nach Anspruch 1, **dadurch gekennzeichnet, daß** der Adapter (21) an der Schraube (16) zur Befestigung des Pedals auf der Tretlagerwelle (11) durch Rastmittel (12, 13, 15) oder durch Gewinde (32) befestigt wird.

3. Pedalarm (27) nach einem der Ansprüche 1 oder 2, **dadurch gekennzeichnet, daß** der Adapter (25) oder eine ihn durchdringende Schraube (62) an dem auf das Pedalauge (100) weisenden Längsende ein Außengewinde (23) aufweisen, das in ein Innengewinde (26) im oder am tretlagerseitigen Auge (100) des Pedalarmes (27) oder in der Schraube (101) zur Befestigung des Pedalarmes auf der Tretlagerwelle eingeschraubt wird.

4. Pedalarm (10) nach einem der Ansprüche 1 bis 3, **dadurch gekennzeichnet, daß** der Adapter (21) an seinem dem Tretlager (4) abgewandten, freien Ende eine radiale Erweiterung (33) zur genauen Ausrichtung des Schildes (17) trägt.

5. Pedalarm (10) nach Anspruch 4, **dadurch gekennzeichnet, daß** der radialen Erweiterung (33) am Adapter (21) eine passende Aufnahme (34) zur konzentrischen Positionierung am Schild (17) zugeordnet ist.

6. Pedalarm (76) nach einem der vorangegangenen Ansprüche, **gekennzeichnet durch** Stellmittel (80, 81, 84, 88) zur Veränderung des achsialen Abstandes des Schildes (93) vom Pedalarm (76).

7. Pedalarm (75) nach Anspruch 6, **dadurch gekennzeichnet, daß** die Stellmittel (80, 81, 85) von einer Stellschraube und einem gegenwirkenden Federelement (84) zur stufenlosen Verstellung gebildet werden.

8. Pedalarm nach Anspruch 6, **gekennzeichnet durch** ein oder mehrere Distanzstücke (88) zwischen dem Auge des Pedalarmes und dem Schild (89) am Pedalarm.

9. Pedalarm nach Anspruch 6, **gekennzeichnet durch** eine Mehrzahl von Rastsitzen (72, 73) am Adapter (71) in unterschiedlicher Achsialposition und zugeordnete Rastmittel (74) am Schild oder umgekehrt.

10. Schutz Schild (1, 17, 60, 89) für einen Pedalarm (10, 27, 76) nach einem der vorangegangenen Ansprüche, mit Mitteln zur Befestigung des Schildes im tretlagerseitigen Auge des Pedalarms
**dadurch gekennzeichnet,**
**daß** die Befestigungsmittel einen Adapter (21, 30, 25, 71, 77, 87) umfassen und durch Mittel (14, 59, 61, 62, 81) zur zentrierenden Befestigung des Schildes (1, 17, 60, 89) am Adapter (21, 30, 25, 71, 77, 87) an der Schildinnenseite.

## Claims

1. a) Crank arm (10, 27, 76) for a bicycle
b) comprising a shield (1, 5, 17, 69, 89) on the crank arm (10, 27, 76) and
c) at least one abutment (6) for the axial positioning of the central region (8, 20, 39) of the shield in/at an eye (9, 28, 51, 100) of the crank arm,
d) comprising a second abutment for the axial positionning of the central region (8, 20, 39) of the shield (1, 5, 17, 69, 89),
e) the attachment of the shield (1, 5, 17, 69, 89) in the axial direction is effected exclusively in its central region and exclusively in or at the eye (9, 28, 51, 100) of the crank arm,
**characterized in that**
f) an adaptor (21, 25, 30, 48, 71, 77, 87) is provided, being fastened in or at the eye (9, 28, 51, 100) of the crank arm and being located between the eye (9, 28, 51, 100) of the crank arm and the shield and **in that**
g) the second abutment (7, 19, 84) is made up by the adaptor (21, 25, 30, 48, 71, 77, 87) between the eye (9, 28, 51, 100) of the crankarm (10, 27, 76) and the shield (1, 5, 17, 69, 89).

2. Crank arm (10) according to claim 1, **characterized in that** the the adaptor (21) is attached to the screw (16) for fastening the crankarm to the bottom bracket bearing shaft (11) by locking means (12, 13, 15) or by a threaded portion (32).

3. Crank arm (27) according to one of the claims 1 or 2, **characterized in that** the adaptor (25) or a screw (62) going through the adaptor are provided with a thread on their end-portion pointing to the eye (100) of the crankarm and **in that** a tapped hole (26) is provided in or at the eye (100) of the crankarm at its bottom bracket bearing end or in the screw (101) for fastening the crankarm on the bottom bracket bearing shaft.

4. Crank arm (10) according to one of claims 1 to 3, **characterized in that** the adaptor (21) is provided with a radial extension (33) at its free end pointing away from the bottom bracket bearing, for precise adjustment of the shield (17).

5. Crank arm 10 according to claim 4, **characterized in that** a suitable seat (34) for concentric positionning of the shield (17) on the adaptor (21) cooperates with the radial extension (33) at the adaptor (21).

6. Crank arm (76) according to one of the preceding claims **characterized in that** adjustment means (80, 81, 84, 88) is provided for adjustment of the axial distance between the shield (93) and the crank arm (76).

7. Crank arm (75) according to claim 6, **characterized in that** the adjustment means (80, 81, 85) are made up by an adjustment screw and a backing spring-element (84) for continuous adjustment.

8. Crank arm according to claim 6, **characterized by** one or more distance elements (88) positioned between the eye of the crank arm and the shield (89) at the crank arm.

9. Crankarm according to claim 6, **characterized in that** the adaptor (71) is provided with a plurality of undercuts (72, 73) in different axial positions and **in that** allocated locking means (74) is provided at the shield or the other way round.

10. Protective shield (1, 17, 60, 89) for a crank arm (10, 27, 76) according to one of the preceding claims comprising means for the attachment of the shield in the eye of the crank arm at the bottom bracket bearing, **characterized in that** the attachment means comprises an adaptor (21, 30, 25, 71, 77, 87)and in means for centering attachment of the shield to the adaptor (21, 30, 25, 71, 77, 87) located on the inner side of the shield.

## Revendications

1. a) Manivelle de pédalier (10, 27, 76) d'une bicyclette
b) avec un bouclier (1, 5, 17, 69, 89) à la manivelle (10, 27, 76) et
c) avec au moins une butée (6) à la/dans l'orifice de l'axe de rotation de la manivelle, constitué pour la fixation axiale de la partie centrale (8, 20, 39) du bouclier (1, 5, 17,69,89),
d) avec une deuxième butée pour la fixation axiale de la partie centrale (8, 20, 39) du bouclier (1, 5, 17, 69, 89),
e) le raccordement du bouclier (1, 5, 17, 69, 89) en direction axiale s'effectuant exclusivement par sa partie centrale et exclusivement à la ou dans l'orifice (9, 28, 51, 100) de l'axe de rotation de la manivelle
se caractérisant
f) par un adaptateur (21, 25, 30, 48, 71, 77, 87) raccordé à la ou dans l'orifice (9, 28, 51, 100) de l'axe de rotation de la manivelle et disposé entre l'orifice de l'axe de rotation de la manivelle et le bouclier (1, 5, 17, 69, 89) et
g) par le fait que l'adaptateur (21, 25, 30, 48, 71, 77, 87) comprend la deuxième butée (7, 19, 84) étant située entre l'orifice (9, 28, 51, 100) de l'axe de rotation de la manivelle et le bouclier (1, 5, 17, 69, 89).

2. Manivelle de pédalier (10) selon la revendication 1 charactérisée en ce que l'adaptateur (21) est attaché au vis (16) de raccordement de la manivelle à l'arbre (11) pédalier par un cran d'arrêt (12, 13, 15) ou par un filetage (32).

3. Manivelle de pédalier (27) selon l'une des revendications 1 ou 2, **caractérisée en ce qu'**une extrémité filetée (23) face à l'orifice de l'axe de rotation de la manivelle faisant partie de l'adaptateur (25) ou d'un vis (62) logé dans l'adaptateur et une section taraudée (26) à la ou dans l'orifice (100) de l'axe de rotation de la manivelle ou dans le vis (101) à raccorder la manivelle à l'arbre pédalier sont constitué à être vissé.

4. Manivelle de pédalier (10) selon une des revendications 1 à 3, **caractérisée en ce que** l'adaptateur (21) étant pourvu d'un élargissement (33) radial à son extrémité libre et détourné du pédalier (4) pour l'orientation précise du bouclier (17).

5. Manivelle de pédalier (10) selon la revendication 4, **caractérisée en ce que** le bouclier comprend une encoche (34) complémentaire à l'élargissement (33) radial de l'adaptateur (21) pour positionner le bouclier (17) concentriquement.

6. Manivelle de pédalier (76) selon l'une quelconque des revendications précédentes, **se caractérisant par** des moyens (80, 81, 84, 88) de réglage de la distance axiale entre le bouclier (93) et de la manivelle (76).

7. Manivelle de pédalier (75) selon la revendication 6, **caractérisée en ce que** les moyens de réglage comprennent un vis de réglage et un élément de ressort s'opposant pour le réglage par degrés.

8. Manivelle de pédalier selon la revendication 6, **se caractérisant par** un ou plusieurs éléments (88) de distance entre l'orifice de l'axe de rotation de la manivelle et le bouclier (89) accroché au bras de manivelle.

9. Manivelle de pédalier selon la revendication 6, **se caractérisant par** une pluralité d'encoches (72, 73) à l'adaptateur (71), les encoches étant juxtaposé en direction axiale et par des moyens (74) de arrêt coordonnés, agencé au bouclier ou à l'inverse.

10. Bouclier (1, 17, 60, 89) pour une manivelle (10, 27, 76) de pédalier selon l'une quelconque des revendications précédentes, comprenant des moyens de fixation du bouclier dans l'orifice de l'axe de rotation de la manivelle de pédalier, **caractérisé en ce que** les moyens de fixation comprennent un adaptateur (21, 30, 25, 71, 77, 87) et **en ce qu'**il y a des moyens (14, 59, 61, 62, 81) de fixation centrissante du bouclier (1,17,60, 89) sur l'adaptateur (21, 30, 25, 71, 77, 87) agencé sur la face intérieur du bouclier.
